Europäisches Patentamt

European Patent Office

Office européen des brevets

(11) Publication number: **0 046 690**
**B1**

(12) **EUROPEAN PATENT SPECIFICATION**

(45) Date of publication of patent specification: **26.03.86**

(51) Int. Cl.⁴: **B 65 G 15/40,** B 65 G 15/34, B 65 G 15/42

(21) Application number: **81303878.3**

(22) Date of filing: **25.08.81**

(54) **Stretchable load-retaining conveyor belt.**

(30) Priority: **26.08.80 US 181404**

(43) Date of publication of application:
**03.03.82 Bulletin 82/09**

(45) Publication of the grant of the patent:
**26.03.86 Bulletin 86/13**

(84) Designated Contracting States:
**DE FR GB**

(56) References cited:
**DE-A-2 644 163**
**FR-A-2 024 880**
**US-A-3 469 676**

(73) Proprietor: **THE FIRST NATIONAL BANK OF AKRON, TRUSTEE**
**106 South Main Street**
**Akron Ohio 44308 (US)**

(72) Inventor: **McGinnis, Hebert E.**
**1638 Cleveland-Massillon Road**
**Akron Ohio 44321 (US)**

(74) Representative: **Bass, John Henton et al**
**REDDIE & GROSE 16 Theobalds Road**
**London WC1X 8PL (GB)**

Courier Press, Leamington Spa, England.

## Description

This invention relates to a stretchable conveyor belt comprising an elongated elastomeric body having a load-carrying belt surface on one side of the body, belt narrowing means responsive to stretching of the belt whereby tension on the belt generates transverse forces in a direction to reduce the width of the belt, and resistance means in the belt to selectively resist the transverse forces generated by the narrowing means to bend the lateral edges of the belt and provide load-retaining walls at the edges.

In most belt conveyors the belt is manufactured in a flat configuration but is troughed for retaining the conveyed material by rollers set at an angle and engaging the edge portions. Belts have also been molded in a U-shape such as the belt of my US—A—4 061 223. In another case it was proposed to transversely prestretch the upper ply of a belt prior to curing so that after curing it would contract and cause the belt edges to curve upwardly. It has also been proposed to make the plies at the edges of the belt of materials having different coefficients of expansion so that during operation in a low temperature environment the edge portions will be curled upward and retain a fluid material. Other belts have been proposed having hinged edge portions which are supported by special brackets between a supporting power belt and the load-carrying container belt.

In some cases it is desirable to enclose the space over the load-carrying surface and belts have been made with retaining walls which have connecting edges. These belts have usually required elaborate mechanical equipment for connecting and disconnecting the edges.

It has also been proposed in French Patent FR—A—2 024 880 to provide a belt construction of the type indicated in the prior art portion of claim 1. This belt construction is curved and troughed across the entire width of the belt, however, no provision has been made to provide the belt with a relatively flat surface between the edge portions for proper tracking of the belt on the load carrying rollers.

In accordance with this invention a conveyor belt is characterised by said belt being stretchable at least 5% when subjected to longitudinal forces in tension upon installation, and by layer means at a centre portion of said belt having edges spaced from said belt edges to balance and neutralise forces between said load retaining walls to confine said bending of said belt to said load retaining walls and thereby provide said load-carrying belt surface with a relatively flat surface between said load retaining walls in said stretched condition of said belt.

The present invention is directed to a conveyor belt which is stretchable a predetermined amount upon installation. The belt edge portions curl up during the stretching and provide load-retaining walls. These walls may curl a greater or lesser amount depending on the belt construction and, where desired, may curl enough to connect the edges and enclose the material being conveyed. The belt edge portions curl up upon longitudinal stretching of the belt due to the interaction of belt narrow means responsive to stretching of the belt and the resistance means resisting narrowing of the belt. The belt narrowing means are closer to the load-carrying surface than the resistance means whereby tension on the belt generates transverse force bending the edge portions of the belt to form retaining walls for the load carried by the belt.

The belt narrowing means can be one or more layers of bias cords which pantograph upon elongation of the belt.

The resistance means can be a layer of transversely extending cords or the elastomeric material of the belt itself.

It is usually desirable to have a belt cover at the load-carrying surface to protect the belt narrowing cords but resistance means under the narrowing means must be sufficient to overcome the resistance of the elastomeric material of the cover and provide a sufficient net resistance in the desired direction to produce the curvature needed.

Since the edges of the belt in the present invention are under sufficient tension to hold the load without distortion, simple flat rollers may be used to support the load-carrying belt run. Another advantage is derived from the minimum tension required to stretch the belt a predetermined amount upon installation. This minimum tension is more or less maintained throughout the belt length providing a built-in take-up action distributed along the entire belt conveyor rather than concentrating this action at a single point on the conveyor which may be a considerable distance from where the take-up action is needed.

The novel construction thus provides a more uniform distribution of stresses and makes possible a conveyor which may have rollers spaced apart a greater distance than rollers for a conventional conveyor.

In the drawings:

Fig. 1 is a schematic side elevation of a stretchable belt embodying the invention mounted on a conveyor in the stretched condition, parts being broken away, and the unloading and loading conveyors being shown in chain-dotted lines.

Fig. 2 is a schematic plan view of the belt and conveyor shown in Fig. 1.

Fig. 3 is a fragmentary enlarged sectional view taken along the line 3—3 in Fig. 1.

Fig. 4 is an enlarged cross-sectional view of the belt of Figs. 1—3 in the unstretched condition showing the position of the reinforcing cords.

Fig. 5 is a cross-sectional view of the stretchable belt of Fig. 4 showing the belt in the stretched condition.

Fig. 6 is a fragmentary cutaway plan view of the belt of Fig. 4 showing the position of the reinforcing cords and plies.

Fig. 7 is a cross-sectional view of a modification of the belt construction embodying the invention.

Fig. 8 is a fragmentary cutaway view of the belt of Fig. 7.

Fig. 9 is a schematic plan view of a conveyor including a further belt modification having edges which are connected for enclosing the material conveyed.

Fig. 10 is a fragmentary cross-sectional view of the belt of Fig. 9 taken along the line 10—10 in Fig. 9.

Fig. 11 is a cross-sectional view of the belt of Fig. 9 shown in the unstretched condition.

Fig. 12 is an enlarged fragmentary sectional view taken along the line 12—12 in Fig. 9.

Fig. 13 is an enlarged fragmentary sectional view taken along the line 13—13 in Fig. 9.

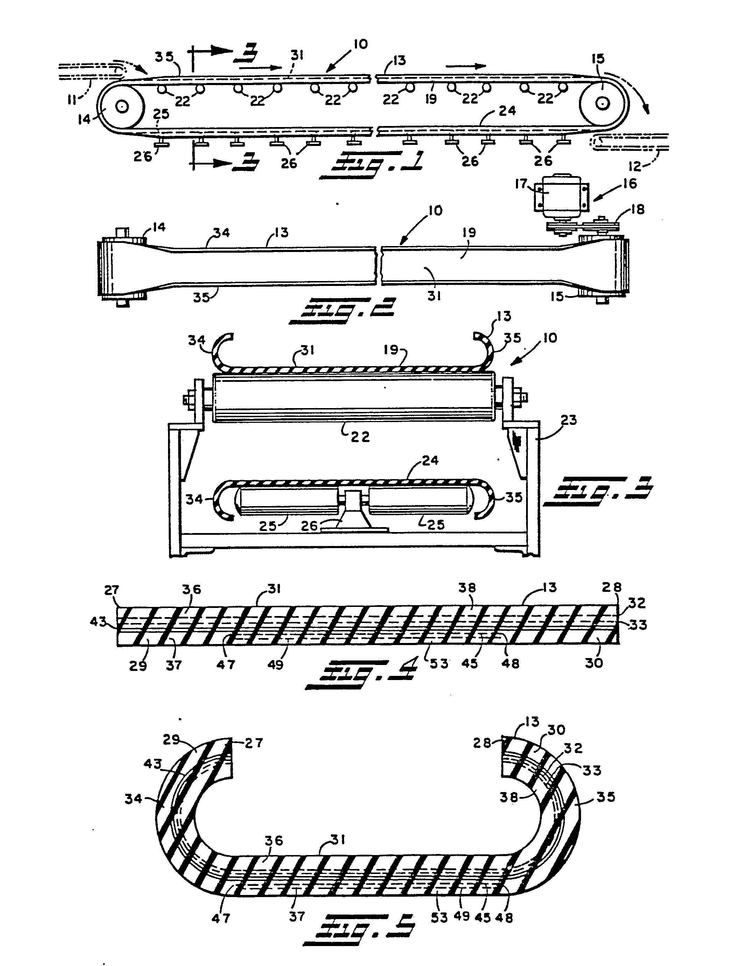

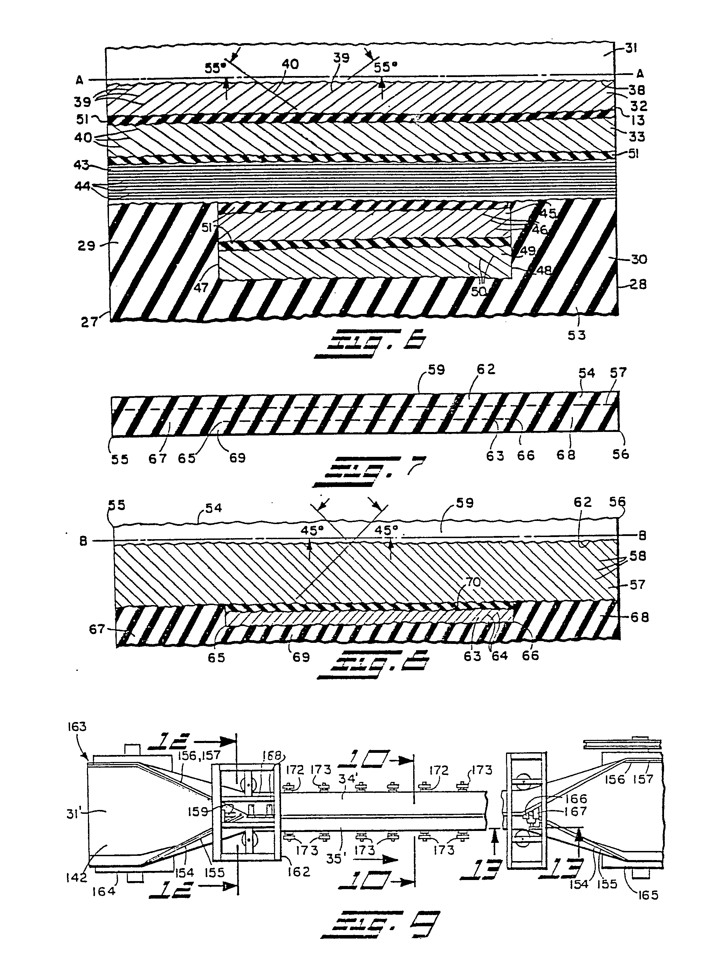

Referring to Figs. 1 and 2, a conveyor 10 is shown located in a horizontal position for conveying bulk materials such as coal from a loading belt 11 at one end to an unloading belt 12 at the other end. The conveyor 10 has a stretchable conveyor belt 13 extending over terminal pulleys such as tail pulley 14 and discharge pulley 15 located at the ends of the conveyor. A suitable belt drive 16 includes an electric motor 17 or other suitable power means connected to the discharge pulley 15 by a flexible chain or belt drive assembly 18.

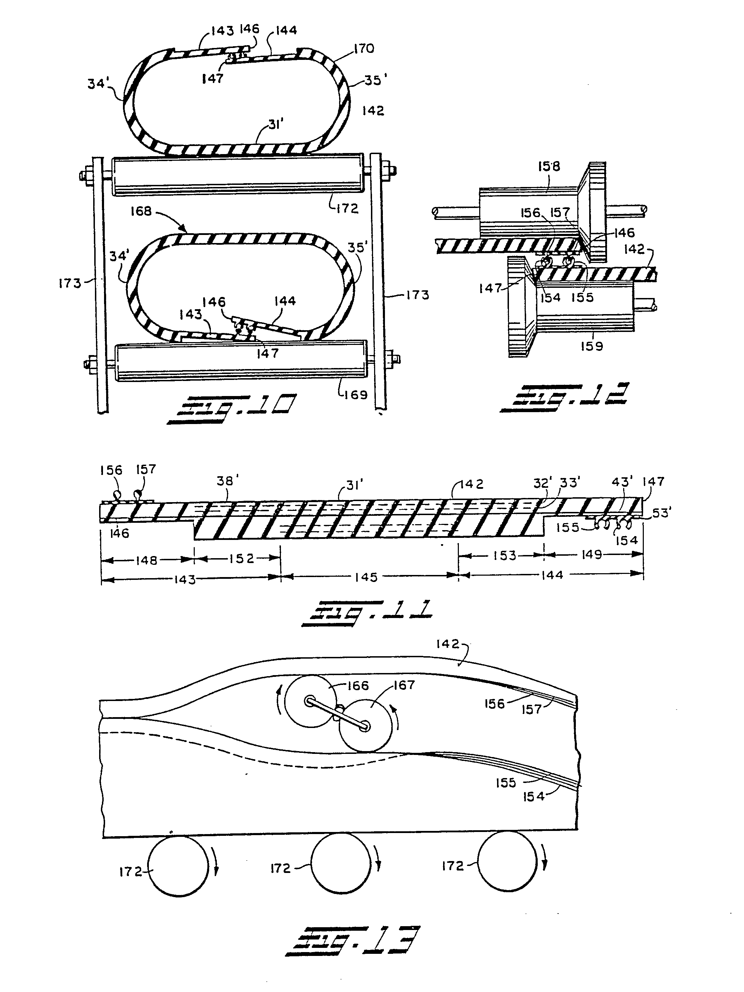

With reference to Figs. 1 and 3, a load-carrying upper run 19 of the conveyor belt 13 is supported by support rollers 22 mounted on roller frames 23 spaced longitudinally along the conveyor 10. A lower run 24 of the conveyor belt 13 is supported on split rollers 25 rotatably mounted on center supports 26 which are fastened to the roller frames 23.

As shown in Figs. 4 and 6, the conveyor belt 13 includes an elongated elastomeric body of rubber or other rubberlike material with spaced-apart edges 27 and 28. A load-carrying belt surface 31 extends between the edges 27 and 28 and is located at the top side of the belt when in the load-carrying upper run 19 of the conveyor 10.

The conveyor belt 13 is stretchable at least 5 percent when subjected to longitudinal forces in tension and is mounted in tension on the conveyor 10. In this embodiment the conveyor belt 13 is spliced at a length such that the belt is elongated at least 5 percent when in the mounted position on the conveyor 10.

Belt narrowing means responsive to stretching of the belt 13 such as first and second layers 32 and 33 of bias cord reinforcing material generate predetermined transverse forces in a direction to reduce the width of the belt upon stretching during the initial installation on the conveyor 10. Since the transverse forces generated by the layers 32 and 33 are closest to the upper belt surface 31 and are resisted by the stiffness of the underlying material, the edges 27 and 28 and edge portions 29 and 30 of the belt 13 are caused to curl or bend upwardly, as shown in Fig. 5, and thereby provide retaining walls 34 and 35 at the edges for retaining material on the belt surface.

In other words, the first and second layers 32 and 33 are positioned closer to the belt surface 31 carrying the load than they are to the surface on the other side of the belt and this is believed to contribute further to bending of the edge portions 29 and 30 upwardly along the belt surface 31. Also, as shown in Fig. 4, the first and second layers 32 and 33 separate the resilient material of the conveyor body into an upper portion 36 between said layers and the belt surface 31 and a lower portion 37 on the other side of the first and second layers. Accordingly when the belt 13 is stretched the reduction in width of the belt surface 31 between the edges 27 and 28 is greater than the reduction in width of the belt at the lower portion 37 which further contributes to the curling or bending of the edges upwardly and away from the belt surface 31.

The belt 13, shown in detail in Figs. 4, 5 and 6, has a top cover 38 which may be of the same resilient material as the rest of the belt, or may be of a more wear-resistant material, because the belt surface 31 over this cover is exposed to abrasion from the material to be conveyed. The elastic material of the belt 13 is highly stretchable and has a hardness on the durometer scale from about 60 to 80. For installations in coal mines the material may be a flame-resistant elastomer. For above-ground operation, the material of the belt 13 may be any conventional wear-resistant rubber such as those known as GRS and SBR rubbers. The first and second layers 32 and 33 have reinforcing cords 39 and 40 laid on a bias of about 55 degrees and may be at angles in the range of from about 40 degrees to about 60 degrees relative to a transverse axis A—A of the belt shown in Fig. 6. The first layer 32 extends from edge 27 to edge 28 and the second layer 33 is coextensive with and positioned under the first layer, but with the cords 40 laid at an opposite bias angle to the cords 39 of the first layer.

A third layer 43 of reinforcing cords is coextensive with and positioned under the second layer 33 and is formed of parallel cords 44 extending substantially transversely of the belt 13. A fourth layer 45 of reinforcing cords 46 is positioned under the third layer 43 with layer edges 47 and 48 spaced from the edges 27 and 28 of the belt 13. The cords 46 of the fourth layer 45 are laid on a bias at substantially the same angle as the cords 39 of the first layer 32. A fifth layer 49 of reinforcing cords 50 is coextensive with and positioned under the fourth layer 45 and has the cords laid on a bias at substantially the same angle as the cords 40 of the second layer 33.

The presence of the narrow band consisting of layers 45 and 49 of reinforcing material on the other side of the midplane balances the forces so that the reduction in width when the belt is stretched does not curl the center of the belt.

In the belt 13 of this embodiment, the cords 39, 40, 44, 46 and 50 of the first through fifth layers 32, 33, 43, 45 and 49 are of polyester and are spaced at about 22 ends per inch (8.67 ends per cm) with each layer having a total thickness of about 0.05 inches (about 0.127 cm). Separating or cushioning components 51 of elastomeric material are provided between the layers 32, 33, 43, 45 and 49 so that there can be relative angular movement of the cords 39 and 40, 40 and 44, 44 and 46, and 46 and 50. The relative movement of the cords contributes to the stretching of the belt 13 in the longitudinal direction and can be increased or decreased by changing the thickness of the cushioning components 51. In building the belt 13, the cords 39, 40, 44, 46 and 50 may be covered by a skim coat of elastomeric rubber and after vulcanization the skim coats of overlapping layers form the cushioning components 51.

In the belt 13, shown in Figs. 4, 5 and 6, the cords 39, 40, 44, 46 and 50 have a thickness of about 0.03 inches (about 0.076 cm) and a skim coat of from about 0.01 to 0.02 inches (about 0.025 to 0.051 cm) is calendered or otherwise applied to each side of the cords resulting in each of the cushioning components 51 having a thickness of from about 0.02 to 0.04 inches (about 0.051 to 0.102 cm). When the belt 13 is vulcanized the thickness of the cushioning components 51 will be reduced because of the removal of air and compacting of the elastomeric material. The top cover 38 has a thickness of about 0.06 inches (about 0.051 cm) and a bottom layer or bottom cover 53 of the belt 13 has a thickness of about 0.06 inches (about 0.051 cm) at the center portion. The total thickness of the belt 13 in the vulcanized condition is about 0.37 inches (about 0.939 cm). The belt 13 of this embodiment has a total width of about 38 inches (about 96.52 cm). The width of the fourth and fifth layers is about 20 inches (about 50.80 cm) and the width of each of the edge portions 29 and 30 of the belt is about 9 inches (about 22.86 cm). The thickness of the bottom cover 53 is greater by 0.1 inches (0.254 cm) or 0.16 inches (0.406 cm) at the edge portions 29 and 30. This compares with the thickness of the top cover 38 of only 0.06 inches (0.152 cm). It is therefore believed that the greater thickness of the bottom cover 53 adjacent the edges 27 and 28 of the belt 13 as compared with the thickness of the top cover 38 contributes to the curling or bending of the edge portions 29 and 30 away from the bottom cover and towards the top cover. In fact it has been found that the greater the difference in thickness between the top cover 38 and the bottom cover 53 the greater is the tendency of the edge portions 29 and 30 to curl.

The belt 13 is built and vulcanized in a flat condition, as shown in Figs. 4 and 6, and then installed in a stretched condition as shown in Figs. 1, 2, 3 and 5. The initial stretching of the belt 13 of at least 5 percent and preferably in the range of from 5 to 15 percent causes the cords 39 and 40 of the first and second layers 32 and 33 and the cords 46 and 50 of the fourth and fifth layers 45 and 49 to pantograph and progressively resist further elongation as the belt is stretched. It has been found that with the cord angles of around 55 degrees relative to the transverse axis A—A the belt 13 may be stretched between 5 and 15 percent after which the resistance to stretching is substantial and sufficient for load-carrying operation of the conveyor 10. It has also been found that the pantographing of the cords 39 and 40 in the first and second layers 32 and 33 generates a substantial transverse force which interacts with the resistance of the resilient material of the belt 13 and bends the edge portions 29 and 30 upwardly to function as retaining walls 34 and 35 as shown in Fig. 5. The cords 46 and 50 of the fourth and fifth layers 45 and 49 neutralize the action of the cords 39 and 40 of the first and second layers 32 and 33 at the center portion of the belt 13, thus maintaining a relatively flat surface 31 between the curled side edge portions 29 and 30. The transverse cords 44 of the third layer 43 further resist a reduction in width or narrowing of the belt 13 and accordingly contribute to the curling or bending of the edge portions 29 and 30. Nevertheless, when the belt 13 passes over the tail pulley 14 and discharge pulley 15 it will flatten out as shown in Figs. 1 and 2.

In the return lower run 24 the belt 13 is in the stretched condition and retaining walls 34 and 35 extend downwardly at each side of the split rollers 25. As shown in Fig. 3, if the belt 13 in the lower run 24 travels to either side, it will be prevented from running off the split rollers 25 by engagement of the retaining walls 34 and 35 with the ends of the split rollers.

As described hereinabove, when the belt 13 is subjected to a sufficient tension, the walls 34 and 35 will be retained in the operating condition for containing the bulk material so that the rollers 22 may be cylindrical. The substantial tension maintained throughout the length of the belt 13 also makes possible a greater spacing between the support rollers 22 than is possible with a conventional conveyor belt.

Referring to Figs. 7 and 8, a modified construction of a conveyor belt 54 is shown having an elongated elastomeric body of resilient material with spaced edges 55 and 56. A first layer 57 has reinforcing cords 58 laid on a bias of about 45 degrees to transverse axis B—B of the belt and extends between the edges 55 and 56 of the belt 54. The belt 54 has a load-carrying belt surface 59 on a top cover 62 under which the first layer 57 is located. A second layer 63 of reinforcing cords 64 is positioned under said first layer 57 with the cords laid at an opposite bias angle of 45 degrees to the angle of the cords 58 of the first layer. The second layer 63 has edges 65 and 66 which are spaced from the edges 55 and 56 of the belt 54 providing a center portion between the edges 65 and 66. Edge portions 67 and 68 are also provided between the edges 55 and 65 and the edges 56 and 66.

A bottom cover 69 is positioned under the second layer 63 and has a thickness of about 0.07 inches (about 0.178 cm) at the center portion. The top cover 62 also has a thickness of about 0.07 inches (about 0.178 cm) and the first layer 57 and second layer 63 each have a thickness of about 0.05 inches (about 0.127 cm). A cushioning component 70 is located between the cords 58 and 64 of the first and second layers 57 and 63 and may

have a thickness of about 0.01 to 0.02 inches (about 0.025 to 0.051 cm) prior to vulcanization of the belt 54. As shown in Figs. 7 and 8, the thickness of the bottom cover 69 at the edge portions 67 and 68 is greater than the thickness at the center portion which further contributes to the curling or bending upwards of the edge portions.

The cords 58 and 64 of the first and second layers 57 and 63 are of a suitable textile material such as polyester and may be spaced at about 22 ends per inch (about 8.67 ends per cm). The width of the belt is about 34 inches (about 86.36 cm) with the center portion having a width of 10 inches (about 25.40 cm) and the edge portions 67 and 68 each having a width of about 12 inches (about 30.48 cm) in the unstretched condition. The belt 54 is stretchable at least 5 percent and when stretched decreases in width a proportional amount. Also edge portions 67 and 68 bend upwardly to provide retaining walls at the sides of the belt surface 59 in the stretched condition in a similar manner to that described hereinabove for the embodiment of Figs. 4, 5 and 6. The cords 64 of the second layer 63 neutralise the curling action of the cords 58 of the first layer 57 and provide a relatively flat surface 59 between the curled side edges 55 and 56.

Referring to Figs. 9, 10, 11, 12 and 13 a further modification is shown in which a belt 142 having a construction shown in greater detail in Fig. 11 has edge portions 143 and 144 and a center portion 145. The edge portions 143 and 144 are located between the center portion 145 and edges 146 and 147 of the belt 142. The edge portions 143 and 144 may be divided into outer margins 148 and 149 adjacent the edges 146 and 147 and inner margins 152 and 153 adjacent the center portion 145. The belt 142 may be of an elastomeric material and have a construction similar to the construction described hereinabove for the belt 13 shown in Figs. 4 and 5 except that the belt 142 shown in Fig. 11 has edge portions 143 and 144 of greater width than the edge portions of the belt 13 by the width of the outer margins 148 and 149. Also the third layer 43' extends beyond the ends of the first and second layers 32' and 33' so that when the belt 142 is in the stretched condition as shown in Fig. 10 the edge portions 143 and 144 will overlap to enclose the space above the load-carrying belt surface 31'. With the construction of the belt 142 the thickness of the belt at the outer margins 148 and 149 is reduced which also reduces the weight at the edges 146 and 147.

As shown in Figs. 11 and 12 connecting means such as channels 154 and 155 are mounted on the bottom cover 53' at the outer margin 149 and ribs 156 and 157 are mounted on the surface 31' of the top cover 38' at the outer margin 148 for matching engagement upon pressing of the margin 148 against the margin 149 by suitable means such as rollers 158 and 159. As shown in Fig. 9 the rollers 158 and 159 may be mounted on a frame 162 at one end of a conveyor 163 close to the tail pulley 164. After the load is applied to the belt surface 31' and the belt 142 takes the configuration shown in Fig. 10 the ribs 156 and 157 may be pushed into engagement with the channels 154 and 155 providing a sealed chamber within the belt for conveying material. At the discharge end of the conveyor 163, discharge pulley 165 tends to spread the walls 34' and 35' and as shown in Fig. 13 separating rollers 166 and 167 may be used to assist in this action and pull the ribs 156 and 157 out of the channels 154 and 155 so that the material conveyed on the surface 31 may be discharged and the return run 168 carried back to the tail pulley 164 by suitable rollers 169 as shown in Fig. 10. The upper run 170 may be supported by support rollers 172. As shown in Fig. 10 a roller frame 173 mounted on a supporting surface such as the ground or hung from the roof supports the rollers 169 and 172.

In operation the belt 142 is mounted on the conveyor 163 under tension in a similar manner to that described hereinabove for the other modifications. As the belt 142 is driven from the tail pulley 164 to the discharge pulley 165 the rollers 158 and 159 will urge the ribs 156 and 157 into engagement with the channels 155 and 154. Then at the discharge end the discharge pulley 165 spreading the walls 34' and 35' and supplemented by the separating rollers 166 and 167 will pull the rigs 156 and 157 out of the channels 154 and 155 and permit the discharge of the material at the discharge pulley 165. The elastomeric material of the belt 142 and the reinforcing cords may be the same as that described hereinabove for the belt 13 of Figs. 4, 5 and 6. The channels 154 and 155 and ribs 156 and 157 may be of a resilient material such as nylon which is adhered to the belt 142 by a suitable adhesive.

In Figs. 11 and 13 the belts 142 have outer margins 148 and 149 which are shown substantially equal in width to the corresponding inner margins 152 and 153. It is evident that the outer margins may have a width substantially greater than the width of the inner margins and be in relation to the width of the center portions 145 and so that the edges will overlap to enclose the load carried by the belts.

While certain representative embodiments and details have been shown for the purpose of illustrating the invention it will be apparent to those skilled in the art that various changes and modifications may be made therein without departing from the invention as defined in the attached claims.

**Claims**

1. A stretchable conveyor belt (13, 54, 142) comprising an elongated elastomeric body having a load-carrying belt surface (31, 59, 31') on one side of said body, belt narrowing means (32/33, 57, 32'/33') responsive to stretching of said belt whereby tension on said belt generates transverse forces in a direction to reduce the width of said belt, and resistance means (43, 54, 43') in said belt to selectively resist said transverse forces generated by said narrowing means to bend the lateral edges (27/28, 55/56, 146/147) of said belt and provide load-retaining walls (34/35, 34'/35') characterised by said belt being stretchable at least 5% when subjected to longitudinal forces in tension upon installation, and by layer means (45/49, 63) at a centre portion of said belt having edges (47/48, 65/66) spaced from said belt edges to balance and neutralise forces between said load retaining walls to confine said bending of said belt to said load retaining walls and thereby provide said load-carrying belt surface with a relatively flat surface between said load-retaining walls in said stretched condition of said belt.

2. A belt (13, 54, 142) in accordance with claim 1 wherein said belt narrowing means includes a layer (32, 57, 32') of reinforcing cords (39, 58) laid on a bias to a transverse axis (A—A, B—B) of said belt.

3. A belt (13, 54, 142) in accordance with claim 2 wherein said cords (39, 58) are laid on a bias in the range of from 45 to 60 degrees to a transverse axis (A—A, B—B) of said belt.

4. A belt (13, 142) in accordance with claim 3 wherein said belt narrowing means includes a second layer (33, 33') of reinforcing cords (40) coextensive with said first-mentioned layer, said first layer extending from one of said edges (27/28, 146/147) to the other of said edges at a position between said second layer and said load-carrying belt surface (31, 31').

5. A belt (13) in accordance with claim 1 wherein said belt contains overlapping layers (32, 33, 43/45, 32'/33') of reinforcing cords (39/40, 44/46) and cushioning components (51) of resilient material located between the cords of said layers to permit relative angular movement of the cords of the overlapping layers during stretching of said belt.

6. A belt (54) in accordance with claim 1 wherein said resistance means (43) includes the resilient material of the elastomeric body of said belt and said narrowing means includes a layer (57) of reinforcing material separating said resilient material into at least two portions (62, 69) with the upper portion (62) between said layer of reinforcing material and said load-carrying belt surface (59) being of less thickness than the lower portion (69) on the other side of said layer of reinforcing material whereby the reduction in width between said edges (55, 56) at said belt surface is greater than the reduction in width at said lower portion causing said edge portions (67, 68) to curl up and away from said belt surface.

7. A belt (13) in accordance with claim 4 wherein said cords of said second layer (33) are laid at an opposite bias angle to the cords of said first layer (32), a third layer (43) of reinforcing cords (44) is coextensive with and positioned under said second layer and formed of parallel cords extending substantially transversely of the belt, and said layer means includes a fourth layer (45) of reinforcing cords (46) under said third layer having layer edges (47, 48) spaced from said edges of said belt and laid on a bias at substantially the same angle as the cords (39) of said first layer, and a fifth layer (49) of reinforcing cords (50) coextensive with and positioned under said fourth layer and laid on a bias at substantially the same angle as the cords of said second layer.

8. A belt in accordance with claim 7 wherein the cords (39, 40, 46, 50) of said first, second, fourth and fifth layers are laid on a bias of about 55 degrees to a transverse axis (A—A) of the belt.

9. A belt in accordance with claim 8 wherein the cords (39, 40, 44, 46, 50) of said first to fifth layers are of polyester spaced at about 22 ends per inch (about 8.67 ends per cm) with a thickness of about 0.05 inches (about 0.127 cm) for each layer.

10. A belt in accordance with claim 9 wherein said elastomeric body has a top layer (38) of wear-resistant material between said first layer (32) and said belt surface (31) on one side of said body, a bottom layer (37) of resilient material under said fifth layer (49), said top layer having a thickness of about 0.06 inches (about 0.152 cm) and said bottom layer (37) having a thickness of about 0.06 inches (about 0.152 cm) and the total thickness of said belt in the vulcanised condition being about 0.37 inches (about 0.939 cm).

11. A belt (142) in accordance with claim 2 wherein said edge portions (143, 144) are of sufficient width and said interaction of said narrowing means and said resistance means is sufficient to bend said edge portions of said belt until said retaining walls substantially enclose the space above said load-carrying belt surface (31') when said belt is in the stretched condition.

12. A belt in accordance with claim 11 wherein each of the belt edges (146, 147) has a connecting means (154—157) for engaging the other of said edges for enclosing the space above said belt surface (31') during operation of the belt (142) in the stretched condition.

13. A belt in accordance with claim 11 wherein said body has a center portion (145) positioned between said edge portions (143, 144), said narrowing means including a first layer (32') of reinforcing cords positioned under said belt surface (31') and extending from within one of said edge portions into the other of said edge portions, said reinforcing cords of said first layer being laid on a bias at an angle to a transverse axis (A—A) of the belt (142), a second layer (33') coextensive with and positioned under said first layer having reinforcing cords laid at an opposite bias angle to the cords of said first layer, a third layer (43') of transverse reinforcing cords extending from one of the belt edges (146, 147) to the other, a fourth layer of reinforcing cords having substantially the same width as said center portion (145), said cords of said fourth layer being laid on a bias at an angle to said transverse axis, a fifth layer of reinforcing cords coextensive with and positioned under said fourth layer having reinforcing cords laid at an opposite bias angle to the cords of said fourth layer.

14. A belt in accordance with claim 13 wherein each of said edge portions (143, 144) has an inner margin (152, 153) adjacent said center portion (145) and an outer margin (148, 149) adjacent a respective one of said edges (146, 147), said first and second layers (32′, 33′) extending through said inner margins but terminating short of said outer margins, said transverse reinforcing cords of said third layer (43′) extending through both said inner and outer margins (152, 153, 148, 149) and a bottom cover (53′) positioned under said fifth layer and the ends of said third layer (43′) having a relatively constant thickness to reduce the thickness of said belt at said outer margin (148, 149).

15. A belt in accordance with claim 13 wherein the angle of said reinforcing cords of said first, second, fourth and fifth layers relative to said transverse axis is about 55 degrees.

16. A belt in accordance with claim 13 wherein connecting means (154—157) for each of said edges (146, 147) are mounted on said edge portions (143, 144) for engagement upon enclosing the space above said belt surface (31′) during operation of the belt in the stretched condition.

**Revendications**

1. Courroie transporteuse extensible (13, 54, 142) comprenant un corps élastomètre allongé ayant une surface (31, 59, 31′) de support d'une charge d'un premier côté du corps, un dispositif (32/33, 57, 32′/33′) de rétrécissement de courroie, commandé par l'allongement de la courroie d'une manière telle que les forces de traction appliquées à la courroie créent des forces transversales dans une direction qui provoque une réduction de la largeur de la courroie, et un dispositif résistant (43, 54, 43′) placé dans la courroie et destiné à résister sélectivement aux forces transversales créées par le dispositif de rétrécissement afin que les bords latéraux (27/28, 55/56, 146/147) de la courroie soient repliés et que des parois (34/35, 34′/35′) de retenue de la charge soient formées, caractérisée en ce qu'elle peut être allongée d'au moins 5 % lorsqu'elle est soumise à des forces longitudinales de traction au cours de son installation, et par un dispositif (45/49, 63) en couche placé dans la partie centrale de la courroie et ayant des bords (47/48, 65/66) distants des bords de la courroie et destiné à équilibrer et neutraliser les forces appliquées entre les parois de retenue de la charge de manière que le pliage de la courroie soit limité aux parois de retenue de charge et que la surface de support de la charge de la courroie ait une surface relativement plate entre les parois de retenue de charge lorsque la courroie est allongée.

2. Courroie (13, 54, 142) selon la revendication 1, dans laquelle le dispositif de rétrécissement comprend une couche (32, 57, 32′) de câblés (39, 58) d'armature disposés avec une certaine inclinaison par rapport à l'axe transversal (A—A, B—B) de la courroie.

3. Courroie (13, 54, 142) selon la revendication 2, dans laquelle les câblés (39, 58) sont disposés avec une inclinaison comprise entre 45 et 60° par rapport à l'axe transversal (A—A, B—B) de la courroie.

4. Courroie (13, 142) selon la revendication 3, dans laquelle le dispositif de rétrécissement comporte une seconde couche (33, 33′) de câblés (40) d'armature, ayant la même étendue que la première couche précitée, la première couche allant d'un premier des bords (27/28, 146/147) jusqu'à l'autre des bords à un emplacement compris entre la seconde couche et la surface (31, 31′) de support de la charge.

5. Courroie (13) selon la revendication 1, telle qu'elle contient des couches (32/33, 43/45, 32′/33′) se recouvrant, formées de câblés (39/40, 44/46) d'armature, et des éléments d'amortissement (51) formés d'un matériau élastique et placés entre les câblés des couches afin qu'ils permettent un déplacement angulaire relatif des câblés des couches en recouvrement pendant l'allongement de la courroie.

6. Courroie (54) selon la revendication 1, dans laquelle le dispositif résistant (43) comprend le matériau élastique du corps élastomère de la courroie, et le dispositif de rétrécissement comprend une couche (57) d'un matériau d'armature séparant le matériau élastique en au moins deux parties (62, 69), la partie supérieure (62) placée entre la couche de matériau d'armature et la surface (59) de support de charge ayant une épaisseur inférieure à celle de la partie inférieure (69) placée de l'autre côté de la couche du matériau d'armature, si bien que la réduction de largeur entre les bords (55, 56), au niveau de la surface de la courroie, est supérieure à la réduction de largeur dans la partie inférieure, de sorte que des parties des bords (67, 68) se recourbent en s'éloignant de la surface de la courroie.

7. Courroie (13) selon la revendication 4, dans laquelle les câblés de la seconde couche (33) sont disposés avec une inclinaison opposée à celle des câblés de la première couche (32), une troisième couche (43) de câblés (44) d'armature a la même étendue que la seconde couche, est placée sous cette seconde couche et est formée de câblés parallèles placés en direction sensiblement transversale par rapport à la courroie, et le dispositif en couches comprend une quatrième couche (45) de câblés d'armature (46) placée sous la troisième couche et ayant des bords (48) distants des bords de la courroie, cette couche étant inclinée avec pratiquement le même angle que les câblés (39) de la première couche, et une cinquième couche (49) de câblés d'armature (50) ayant la même étendue que la quatrième couche, placée sous celle-ci et formant un angle pratiquement égal à celui des câblés de la seconde couche.

8. Courroie selon la revendication 7, dans laquelle les câblés (39, 40, 46, 50) de la première, de la seconde, de la quatrième et de la cinquième couche sont disposés avec une inclinaison d'environ 55° par rapport à l'axe transversal (A—A) de la courroie.

9. Courroie selon la revendication 8, dans laquelle les câblés (39, 40, 44, 46, 50) des couches, de la première à la cinquième, sont formés de polyester et disposés à raison d'environ 8,67/cm linéaire, avec une épaisseur d'environ 0,127 cm pour chaque couche.

10. Courroie selon la revendication 9, dans laquelle le corps élastomère a une couche supérieure (38) d'un matériau résistant à l'usure, entre la première couche (32) et la surface (31) de la courroie, d'un premier côté du corps, une couche inférieure (37) d'un matériau élastique, placée sous la cinquième couche (49), la couche supérieure ayant une épaisseur d'environ 0,152 cm et la couche inférieure (37) ayant une épaisseur d'environ 0,152 cm, l'épaisseur totale de la courroie, à l'état vulcanisé, étant d'environ 0,939 cm.

11. Courroie (142) selon la revendication 2, dans laquelle les parties des bords (143, 144) ont une largeur suffisante et l'interaction du dispositif de rétrécissement et du dispositif résistant suffit à provoquer le pliage des parties des bords de la courroie jusqu'à ce que les parois de retenue enferment pratiquement l'espace délimité au-dessus de la surface (31') de support de la charge lorsque la courroie est allongée.

12. Courroie selon la revendication 11, dans laquelle chacun des bords (146, 147) de la courroie a un dispositif de raccordement (154—157) destiné à coopérer avec l'autre des bords afin que l'espace délimité au-dessus de la surface de la courroie (31') soit enfermé pendant le fonctionnement de la courroie (142) lorsque celle-ci est allongée.

13. Courroie selon la revendication 11, dans laquelle le corps a une partie centrale (145) placée entre les parties formant les bords (143, 144), le dispositif de rétrécissement comprenant une première couche (32') de câblés d'armature placée sous la surface de la courroie (31') et partant de l'intérieur de l'une des parties de bord vers l'autre des parties de bord, les câblés d'armature de la première couche étant disposés en direction inclinée par rapport à un axe transversal (A—A) de la courroie (142), une seconde couche (33') de même étendue que la première et placée sous celle-ci ayant des câblés d'armature disposés avec une inclinaison opposée à celle des câblés de la première couche, une troisième couche (43') de câblés transversaux d'armature étant disposée de l'un des bords de la courroie (146, 147) à l'autre, une quatrième couche de câblés d'armature ayant pratiquement la même largeur que la partie centrale (145), les câblés de la quatrième couche étant disposés avec une certaine inclinaison par rapport à l'axe transversal, une cinquième couche de câblés d'armature, ayant la même étendue que la première couché et placée sous la quatrième couche, ayant des câblés d'armature ayant une inclinaison opposée à celle des câblés de la quatrième couche.

14. Courroie selon la revendication 13, dans laquelle chacune des parties des bords (143, 144) a une marge interne (152, 153) adjacente à la partie centrale (145) et une marge externe (148, 149) adjacente à un bord respectif (146, 147), la première et la seconde couche (32', 33') étant disposées dans les marges internes mais se terminant à une faible distance des marges externes, les câblés transversaux d'armature de la troisième couche (43') étant disposés à la fois dans les marges internes et externes (152, 153, 148, 149), et un revêtement inférieur (53') placé sous la cinquième couche et les extrémités de la troisième couche (43'), ayant une épaisseur relativement constante afin que l'épaisseur de la courroie soit réduite à sa marge externe (148, 149).

15. Courroie selon la revendication 13, dans laquelle l'inclinaison des câblés d'armature de la première, de la seconde, de la quatrième et de la cinquième couche par rapport à l'axe transversal est d'environ 55°.

16. Courroie selon la revendication 13, dans laquelle des dispositifs de raccordement (154—157) des deux bords (146, 147) sont montés sur les parties des bords (143, 144) de manière qu'ils coopèrent lorsque l'espace délimité au-dessus de la surface (31') de la courroie est enfermé pendant le fonctionnement de la courroie à l'état allongé.

**Patentansprüche**

1. Ein dehnbares Forderband (13, 54, 142) mit einem langgestreckten Körper aus elastischem Polymer, der auf der einen Körperseite eine ladungstragende Bandoberfläche (31, 59, 31') aufweist, mit Bandverengungsmitteln (32/33, 57, 32'/33'), die auf Dehnung des genannten Bandes ansprechen, wobei Spannung auf das genannte Band Querkräfte hervorruft in Richtung einer Breitenverengung des genannten Bandes, und mit Widerstandsmitteln (43, 54, 43') innerhalb des genannten Bandes, die den genannten von den genannten Widerstandsmitteln hervorgerufenen Querkräften selektiv Widerstand leisten, um die Längsränder (27/28, 55/56, 146/147) des genannten Bandes aufzubiegen und ladungshaltende Wände (34/35, 34'/35') zu erzeugen, dadurch gekennzeichnet, daß das genannte Band um mindestens 5 % dehnbar ist aufgrund von längsgerichteten Zugkräften, die bei der Installation auftreten, und durch Einlagemittel (45/49, 63) in einem mittleren Bereich des genannten Bandes, deren Ränder (47/48, 65/66) zu den Längsrändern des genannten Bandes einen Abstand haben, die dazu dienen, Kräfte zwischen den ladungshaltenden Wänden auszubalancieren und zu neutralisieren, um die Krümmung des genannten Bandes zu den genannten ladungshaltenden Wänden zu begrenzen und dadurch in dem genannten gedehnten Zustand des genannten Bandes eine ladungstragende Bandoberfläche zu erzielen mit einer relativ flachen Oberfläche zwischen den genannten ladungshaltenden Wänden.

2. Ein Band (13, 54, 142) nach Anspruch 1, wobei die genannten Verengungsmittel eine Einlage (32, 57, 32') aus verstärkenden Schnüren (39, 58) aufweisen, die schräg zur Querachse (A—A, B—B) des genannten Bandes liegen.

3. Ein Band (13, 54, 142) nach Anspruch 2, wobei die genannten Schnüre (39, 58) mit einer Schräglage im Bereich von 45 bis 60 Grad zur Querachse (A—A, B—B) des genannten Bandes liegen.

4. Ein Band (13, 142) nach Anspruch 3, wobei die genannten Bandverengungsmittel eine zweite Einlage (33, 33') aus verstärkenden Schnüren (40) in der gleichen Ausdehnung wie die erstgenannte Einlage aufweisen, wobei sich die erstgenannte Einlage von einem der genannten Längsränder (27/28, 146/147) zu dem anderen der genannten Längsränder erstreckt in einer Position zwischen der genannten zweiten Einlage und der genannten ladungstragenden Bandoberfläche (31, 31').

5. Ein Band (13) nach Anspruch 1, wobei das genannte Band überlappende Einlagen (32/33, 43/45, 32'/33') enthält und dämpfende Mittel (51) aus federndem Material, die zwischen den Schnüren der genannten Einlage angeordnet sind, um relativ winklige Bewegung der Schnüre der überlappenden Einlagen beim Dehnen des genannten Bandes zu ermöglichen.

6. Ein Band (54) nach Anspruch 1, wobei die genannten Widerstandsmittel (43) deas federnde Material des elastomerischen Körpers des genannten Bandes einschließen und die genannten Verengungsmittel eine Einlage (57) aus verstärkendem Material einschließen, die das genannte federnde Material in mindestens zwei Teile (62, 69) teilen mit dem oberen Teil (62) zwischen der genannten Einlage aus verstärkendem Material und der genannten ladungstragenden Bandoberfläche (59) von geringerer Stärke als das untere Teil (69) auf der anderen Seite der genannten Einlage aus verstärkendem Material, wobei die Breitenverengung zwischen den genannten Rändern (55, 56) auf der genannten Bandoberfläche größer ist als die Breitenverengung auf dem genannten unteren Teil, was bedingt, daß die genannten Randteile (67/68) sich von der genannten Bandoberfläche auf und wegrollen.

7. Ein Band (13) nach Anspruch 4, wobei die genannten Schnüre der genannten zweiten Einlage (33) in engegengesetztem Querginkel zu den Schnüren der genannten ersten Einlage (32) liegen, eine dritte Einlage (43) aus verstärkenden Schnüren (44) in der gleichen Ausdehnung wie und unter der genannten zweiten Einlage angeordnet und aus parallelen Schnüren gebildet ist, die sich hauptsächlich quer zum Band erstrecken, und die genannten Einlagemittel eine vierte Einlage (45) aus verstärkenden Schnüren (46) unter der genannten dritten Einlage einschließen, deren Einlageränder (47, 48) sich zwischen den genannten Rändern des genannten Bandes erstrecken und in einer Schräglage mit in der Hauptsache dem gleichen Winkel wie die Schnüre (39) der genannten ersten Einlage liegen, und eine fünfte Einlage (49) aus verstärkenden Schüren (50) in der gleichen Ausdehnung wie und unter der genannten vierten Einlage angeordnet ist und in einer Schräglage, die in der Hauptsache im gleichen Winkel wie die Schnüre der genannten zweiten Einlage liegt.

8. Ein Band nach Anspruch 7, wobei die Schnüre (39, 40, 46, 50) der genannten ersten, zweiten, vierten und fünften Einlage mit einer Schräglage von etwa 55 Grad zur Querachse (A—A) des Bandes liegen.

9. Ein Band nach Anspruch 8, wobei die Schnüre (39, 40, 44, 46, 50) der genannten ersten und fünften Einlage aus Polyester bestehen, das eingeteilt ist in etwa 22 Enden pro inch (etwa 8,67 Enden pro cm (Zentimeter)) mit einer Starke von etwa 0,05 inches (etwa 0,127 cm) für jede Einlage.

10. Ein Band nach Anspruch 9, wobei der elastomerische Körper eine Deckschicht (38) aus abnutzungsfestem Material zwischen der genannten ersten Einlage (32) und der genannten Bandoberfläche (31) auf einer Seite des genannten Körpers hat, eine Bodenlage (37) aus federndem Material unter der genannten fünften Einlage (49), wobei die genannte Deckschicht eine Stärke von etwa 0,06 inches (etwa 0,152 cm) und die genannte Bodenschicht eine Stärke von etwa 0,06 inches (etwa 0,152 cm) hat und die Gesamtstärke des genannten Bandes in vulkanisiertem Zustand etwa 0,37 inches (etwa 0,939 cm) beträgt.

11. Ein Band (142) nach Anspruch 2, wobei die genannten Randteile (143, 144) von ausreichender Stärke sind und die genannte Wechselwirkung der genannten Verengungsmittel und der genannten Widerstandsmittel ausreichend ist, die genannten Randteile des genannten Bandes zu spannen bis die genannten Rüchaltewände in der Hauptsache den Zwischenraum über der genannten ladungstragenden Bandoberfläche (31') einschließen wenn das genannte Band in gedehntem Zustand ist.

12. Ein Band nach Anspruch 11, wobei jedes der Bandränder (146, 147) Verbindungsmittel (154—157) aufweist, um sich mit dem anderen der genannten Ränder zu verbinden, um den Zwischenraum über der genannten Bandoberfläche (31') während des Wirkens des Bandes (142) in gedehntem Zustand einzuschließen.

13. Ein Band nach Anspruch 11, wobei der genannte Körper ein Mittelteil (145) aufweist, das zwischen den genannten Randteilen (143, 144) angeordnet ist, die genannten Verengungsmittel eine erste Einlage (32') aus verstärkenden Schnüren einschließen, die unter die genannten Bandoberfläche (31') angeordnet sind und sich von innerhalb einem der genannten Randteile bis in das andere der genannten Randteile erstrecken, die genannten verstärkenden Schnüre der genannten ersten Einlage mit einer Schräglage im Winkel zur Querachse (A—A) des Bandes (142) liegen, eine zweite Einlage (33') in der gleichen Ausdehnung wie und unter der genannten ersten Einlage angeordnet ist, die verstärkende Schnüre aufweist, die in einem entgegengesetzen Schrägwinkel zu den Schnüren der genannten ersten Einlage liegen, eine dritte Einlage (43') aus quergerichteten verstärkenden Schnüren sich von einem der Bandränder (146, 147) zu dem anderen erstreckt, eine vierte Einlage aus verstärkenden Schnüren, die in der Hauptsache die gleiche Breite wie das genannte Mittelteil (145) hat, die genannten Schnüre der genannten vierten Einlage in einer Schräglage in einem Winkel zur genannten Querachse liegen, eine fünfte Einlage aus verstärkenden Schnüren in gleicher Ausdehnung wie und unter der genannten vierten Einlage angeordnet ist, mit verstärkenden Schnüren, die in einem entgegengesetzten Schrägwinkel zu den Schnüren der genannten vierten Einlage liegen.

14. Ein Band nach Anspruch 13, wobei jedes der genannten Randteile (143, 144) einen an das Mittelteil (145) angrenzenden Innenrand (152, 153) und einen an den jeweiligen der genannten Ränder (146, 147) angrenzenden Außenrand (148, 149) aufweist, die genannte erste und zweite Einlage (32', 33') sich durch die genannten Innenränder hindurch erstrecken aber kurz vor den genannten Außenrändern enden, die genannten quergerichteten verstärkenden Schnüre der genannten dritten Einlage (43') sich durch die genannten Innen- und Außenränder (152, 153, 148, 149) hindurch erstrecken und eine Bodenabdeckung unter der genannten fünften Einlage angeordnet ist, und die Enden der genannten dritten Einlage (43') eine verhältnismäßig konstante Stärke aufweisen, um die Stärke des genannten Bandes am genannten Außenrand (148, 149) zu verringern.

15. Ein Band nach Anspruch 13, wobei der Winkel der genannten verstärkenden Schnüre der genannten ersten, zweiten, vierten und fünften Einlage im Bezug zur genannten Querachse etwa 55 Grad beträgt.

16. Ein Band nach Anspruch 13, wobei Verbindungsmittel (154—157) für jeden der genannten Ränder (146, 147) auf die genannten Randteile (143, 144) angefügt sind und auf diese einwirken, um den Zwischenraum über der genannten Bandoberfläche (31') während des Wirkens in gedehntem Zustand zu schließen.

0 046 690

Fig. 1

Fig. 2

Fig. 3

Fig. 4

Fig. 5

1

FIG. 6

FIG. 7

FIG. 8

FIG. 9

2

_Fig.10_

_Fig.12_

_Fig.11_

_Fig.13_